## Europäisches Patentamt
## European Patent Office
## Office européen des brevets

(19)

(11) Veröffentlichungsnummer: **0 207 312**
**B1**

# EUROPÄISCHE PATENTSCHRIFT

(12)

(45) Veröffentlichungstag der Patentschrift:
22.11.90

(51) Int. Cl.⁵: **E21B 43/22**

(21) Anmeldenummer: 86107470.6

(22) Anmeldetag: 02.06.86

(54) **Verfahren zur Gewinnung von Öl aus unterirdischem Speichergestein.**

(30) Priorität: 29.06.85 DE 3523355

(43) Veröffentlichungstag der Anmeldung:
07.01.87 Patentblatt 87/2

(45) Bekanntmachung des Hinweises auf die Patenterteilung:
22.11.90 Patentblatt 90/47

(84) Benannte Vertragsstaaten:
AT DE FR GB IT NL

(56) Entgegenhaltungen:
EP-A- 0 003 183
EP-A- 0 111 354
EP-A- 0 117 970
EP-A- 0 121 964
EP-A- 0 177 098

Die Akte enthält technische Angaben, die nach dem
Eingang der Anmeldung eingereicht wurden und die
nicht in dieser Patentschrift enthalten sind.

(73) Patentinhaber: HÜLS AKTIENGESELLSCHAFT,
Patentabteilung / PB 15 - Postfach 13 20,
D-4370 Marl 1(DE)

(72) Erfinder: Balzer, Dieter, Dr., Talstrasse 21,
D-4358 Haltern(DE)

## Beschreibung

Bei der Gewinnung von Öl aus Speichergestein gelingt es im allgemeinen nur, einen Bruchteil des ursprünglich vorhandenen Öls durch primäre Gewinnungsverfahren zu fördern. Hierbei gelangt das Öl infolge des natürlichen Lagerstättendrucks an die Erdoberfläche. Bei der sekundären Ölgewinnung wird gewöhnlich Wasser in eine oder mehrere Injektionsbohrungen der Formation eingepreßt und das Öl zu einer oder mehreren Produktionsbohrungen getrieben und dann an die Erdoberfläche gebracht. Dieses sogenannte Wasserfluten als Sekundärmaßnahme ist relativ billig und wird entsprechend häufig eingesetzt, führt jedoch in vielen Fällen nur zu einer geringen Mehrentölung der Lagerstätte.

Eine wirksame Verdrängung des Öls, die teurer, jedoch im Hinblick auf die zukünftige Ölverknappung volkswirtschaftlich erforderlich ist, gelingt durch tertiäre Maßnahmen. Darunter sind Verfahren zu verstehen, bei denen entweder die Viskosität des Öls erniedrigt und/oder die Viskosität des nachflutenden Wassers erhöht und/oder die Grenzflächenspannung zwischen Wasser und Öl erniedrigt werden.

Die meisten dieser Prozesse lassen sich entweder als Lösungs- oder Mischfluten, thermische Ölgewinnungsverfahren, Tensid- oder Polymerfluten bzw. als Kombination von mehreren der genannten Verfahren einordnen.

Thermische Gewinnungsverfahren beinhalten die Injizierung von Dampf oder heißem Wasser, bzw. sie erfolgen als Untertage-Verbrennung. Lösungs- oder Mischungsverfahren bestehen im Injizieren eines Lösungsmittels für das Erdöl in die Lagerstätte, wobei dies ein Gas und/oder eine Flüssigkeit sein kann.

Tensidprozesse – je nach Tensidkonzentration, gegebenenfalls Tensidtyp und Zusätzen unterscheidet man tensidgestütztes Wasserfluten, übliches Tensidfluten (Low tension flooding), micellares Fluten und Emulsionsfluten – beruhen in erster Linie auf einer starken Erniedrigung der Grenzflächenspannung zwischen Öl und Flutwasser. Des weiteren sind die Benetzbarkeit der Gesteinsoberfläche sowie die Mobilitätsverhältnisse von großer Bedeutung. Günstige Mobilitätsverhältnisse zwischen Öl und Wasser werden durch Polymere erzielt.

Stand der Technik

In der EP-A 0 121 964 sowie der EP-A 0 111 354 werden Herstellung von Alkylarylsulfonaten bzw. Alkylxylolsulfonaten und deren Verwendung in Ölförderungsprozessen beschrieben.

Die EP-A 0 177 098 zeigt ein Verfahren zur Gewinnung von Öl aus unterirdischem Speichergestein durch Injektion einer Mischung von Natriumethoxyacetat mit einem hydrophoben Tensid auf.

Die vorliegende Erfindung bezieht sich auf ein Verfahren zur Gewinnung von Öl durch Tensidfluten bzw. Micellar-Polymer-Fluten in mittel- bis höhersalinaren Lagerstätten. Ganz besonders bezieht sich die Erfindung auf ein Verfahren für Lagerstätten, die von starken Temperaturschwankungen oder einem Temperaturgradienten beherrscht werden. Da die Temperatur des Speichergesteins im wesentlichen von dem Wärmefluß aus dem Erdinneren in den Oberflächenbereich bestimmt wird, beruhen nicht konstante Temperaturen entweder auf starken Speicherneigungen oder auf einem Eingriff in das Naturgeschehen. Letzteres ist z.B. auch die Injektion von Wasser während des Wasserflutens. Lang andauerndes Wasserfluten, besonders von Hochtemperaturlagerstätten, führt gewöhnlich zur Ausbildung eines starken Temperaturgradienten. Besonders ausgeprägt ist dies bei den Hochtemperatur-Offshore-Lagerstätten, die mit kaltem Seewasser geflutet werden, was zu einer starken Abkühlung der weiteren Injektionszonen führt. So sind z.B. bei Lagerstätten im Nordseebereich Temperaturspannen zwischen ca. 10°C nahe der Injektionssonden und ca. 100°C in entfernteren Bereichen bekannt. Ein entsprechendes Tensidflutverfahren soll jedoch möglichst in dem gesamten Temperaturbereich optimal wirksam sein. Dies setzt selbstverständlich voraus, daß das Tensid unter Lagerstättenbedingungen lange Zeit stabil ist.

Ein weiteres Problem des Tensidflutens besteht darin, daß die meisten der dafür geeigneten Tenside, wie z.B. Alkyl-, Alkylaryl- oder Petroleumsulfonat, eine sehr niedrige Toleranzgrenze gegenüber der Salinität der Lagerstättenwässer besitzen. Bereits Salzkonzentrationen von 1 000 ppm gelten vielfach als problematisch, wobei die Empfindlichkeit dieser Tenside gegenüber Erdalkaliionen besonders ausgeprägt ist. Als obere kritische Grenzkonzentration der Salinität werden 500 ppm genannt (US-A 4 110 228). In Gegenwart höherer Salzkonzentrationen bilden sich bei Einsatz der genannten Tenside Fällungsprodukte in Form unlöslicher Salze. Hierdurch geht einmal Substanz für die erwünschte grenzflächenaktive Wirkung an der Grenzfläche Wasser-Öl verloren, zum andern können die Fällungsprodukte zu Verstopfungen der Formation führen. Nun besitzen viele Lagerstättenwässer wesentlich höhere Salinitäten; ein sehr beachtlicher Teil der nordamerikanischen Leichtöllagerstätten besitzt Salinitäten um 100 000 ppm und höher, wobei der Gehalt an gelösten Erdalkaliionen in den meisten Fällen beträchtlich ist. Auch das bei Off-Shore-Lagerstätten häufig zu Sekundärmaßnahmen injizierte Seewasser besitzt mit einem TDS-Wert von ca. 36 000 ppm und Erdalkaliion von ca. 2 000 ppm eine weit oberhalb der Verträglichkeitsgrenze liegende Salinität.

Typische Tenside, die selbst gegenüber extrem hohen Gesamtsalinitäten und entsprechenden Erdalkaliionenkonzentrationen tolerant sind und hochwirksam Öl zu mobilisieren vermögen, sind Verbindungen vom Typ der carboxylmethylierten Oxethylate, Ethersulfonate und Ethersulfate, wie sie in den US-A 4 293 428, 4 299 711, 4 485 873 sowie EP-B 0 064 384 beschrieben werden. Während die Ethersulfate (vgl. DE-A 2 558 548) aber als nicht-temperaturstabil angesehen werden müssen, gelten die carboxymethylierten Oxethylate und die Ethersulfonate auch unter drastischen Bedingungen als langzeit-temperaturstabil.

Carboxymethylierte Oxethylate als Tenside zum Tensidfluten bzw. Micellar-Tensid-Fluten lassen sich für die gegebene Lagerstätte maßschneidern. Wie in den US-A 4 457 373 und 4 485 873 gezeigt wird, ist das Kriterium für diese Anpassung des Tensides an das gegebene Reservoirsystem die sogenannte Phasen-Inversions-Temperatur (PIT). Liegt die PIT des Systems Rohöl/Formationswasser/Tensid/ggf. Zusätze bei Lagerstättentemperatur oder bis zu 10°C darüber, so ist eine optimale Wirkung des Tensids hinsichtlich Ölmobilisierung und Ölbankbildung zu erwarten. Eine durchaus übliche relativ geringfügige Abweichung der örtlichen Lagerstättentemperatur von ihrem Mittelwert um + 5°C beeinflußt die Tensidewirksamkeit hierbei nicht sonderlich. Starke Temperaturgradienten mit Temperaturspannen zwischen 10 und 100°C jedoch beeinträchtigen die Wirkung der carboxymethylierten Oxethylate drastisch. Dies läßt sich eindrucksvoll zeigen durch Messung der Grenzflächenspannung Öl wäßrige Tensidlösung in Abhängigkeit der Temperatur (vgl. D. Balzer, Proceedings 2nd European Symposium Enhanced Oil Recovery, Paris 1982). Danach durchschreitet die Grenzflächenspannung des Systems Rohöl/Formationwasser/carboxymethyliertes Oxethylat ein tiefes, schmales Minimum bei einer bestimmten Temperatur, die gewöhnlich nahe der PIT liegt. Bei deutlich niedrigeren oder höheren Temperaturen besitzt hingegen das Tensid für dieses Lagerstättensystem eine sehr viel geringere Grenzflächenaktivität und demzufolge eine eingeschränkte Wirksamkeit bei der Ölmobilisierung. So läßt sich mit einem carboxymethylierten Oxethylat, angewendet auf ein Lagerstättensystem, wobei die PIT bei ca. 95°C lag, bei 90°C eine starke Mehrentölung in Form einer Ölbank beobachten. Senkt man hingegen die Versuchsstemperatur auf 20°C, so läßt sich nur wenig Restöl – und selbst das nur in Form einer Öl-in-Wasser-Emulsion – freisetzen.

Es bestand daher die Aufgabe, für den Einsatz der in mittel- bis hochsalinaren Lagerstättensystemen stark ölmobilisierend wirkenden und selbst unter drastischen Bedingungen als langzeit-temperaturstabil geltenden carboxymethylierten Oxethylate Bedingungen zu finden, die ihre Wirksamkeit auch in Lagerstätten mit veränderlichen Temperaturen gewährleisten.

Diese Aufgabe wurde überraschenderweise gelöst durch ein Verfahren zur Gewinnung von Öl aus unterirdischem Speichergestein, das mindestens durch eine Injektions- und eine Produktionsbohrung durchteuft ist durch Einpressen einer Lösung oder Dispersion eines carboxymethylierten Oxalkylates der Formel $R\text{-}(OC_3H_6)_m(OC_2H_4)_nOCH_2COOM$, in der R einen linearen oder verzweigten aliphatischen Rest mit 6 bis 20 Kohlenstoffatomen, einen Monoalkylaromatischen Rest mit 3 bis 18 Kohlenstoffatomen in der Alkylgruppe oder einen di- bzw. Oligo-alkylaromatischen Rest mit 1 bis 18 Kohlenstoffatomen pro Alkylgruppe, wobei die Gesamtzahl der Kohlenstoffatome in den Alkylketten 5 bis 40 beträgt, m 1 bis 20, n 3 bis 100, M ein Alkali- oder Erdalkalimetallion oder Ammonium bedeutet und der Carboxymethylierungsgrad zwischen 10 und 100% liegt, in eine Injektionsbohrung, das dadurch gekennzeichnet ist, daß das carboxymethylierte Oxalkylat in Mischung mit einem hydrophoberen Tensid eingesetzt wird.

Das hydrophobere Tensid kann ein Monoalkylbenzolsulfonat mit 6 bis 20 Kohlenstoffatomen in der Alkylkette oder in Dialkylbenzolsulfonat mit 1 bis 20 Kohlenstoffatomen pro Alkylkette, wobei die Gesamtzahl der Kohlenstoffatome in den Alkylketten pro Molekül 8 bis 30 beträgt, ein Petroleumsulfonat, oder ein Alkylsulfonat mit 10 bis 30 C-Atomen sein.

Die zu injizierende Tensidlösung oder -dispersion besitzt zweckmäßigerweise eine Konzentration von 0,1 bis 20%.

Die Sluggröße der tensidhaltigen Flüssigkeiten sollte 0,01 bis 2 Porenvolumen (PV) betragen.

Die Massen des carboxymethylierten Oxethylats verhalten sich zu denen des hydrophoberen Tensids zweckmäßigerweise wie 4:1 bis 1:4.

Nach der Injektion des Tensidslugs wird vorzugsweise Formations- oder Flutwasser in die Lagerstätte eingepreßt, wobei das Formations- oder Flutwasser zweckmäßigerweise ein wasserlösliches, viskositätserhöhendes Polymer enthält.

Vorzugsweise wird der Tensidmischung ein Cosolvent im Verhältnis 1:5 bis 5:1 zugesetzt.

Es können ein- oder mehrwertige Alkohole oder Alkylether von mehrwertigen Alkoholen als Cosolvent eingesetzt werden.

Es werden erfindungsgemäß also hydrophile, d.h. in dem Wasser der betreffenden Lagerstätten wenigstens zu 1,0 Gew.-%, vorzugsweise zu 10,0 Gew.-%, lösliche, carboxymethylierte Oxethylate in Mischung mit geeigneten hydrophoben, d.h. in dem Wasser der betreffenden Lagerstätte weitgehend unlösliche (wobei die Löslichkeitsgrenze 1 000 ppm beträgt) Tenside einsetzt. Als geeignete hydrophobe Tenside haben sich Alkylbenzol-, Dialkylbenzol-, Alkan- sowie Petroleumsulfonate erwiesen. Günstig ist der gleichzeitige Einsatz von Cotensiden wie ein- oder mehrwertigen Alkoholen oder Alkylethern von mehrwertigen Alkoholen.

Die erfindungsgemäß einzusetzenden carboxymethylierten Oxethylate lassen sich z.B. nach der DE-C 2 418 444 durch Umsetzung von Oxethylaten der Formel $R\text{-}(OC_2H_3(CH_3))_m(OC_2H_4)_nH$ mit einem Salz der Chloressigsäure in Gegenwart von Alkalihydroxid oder anderen Basen herstellen. Aber auch andere Herstellungsverfahren sind geeignet. R bedeutet hierbei einen gesättigten oder ungesättigten, geradkettigen oder verzweigten Alkylrest mit 6 bis 20, vorzugsweise 8 bis 16 C-Atomen oder einen Monoalkylarylrest mit 3 bis 18, vorzugsweise 4 bis 16 C-Atomen in der Alkylkette oder einen Dialkylaryl- bzw. Oligoalkylarylrest mit 1 bis 18 C-Atomen pro Alkylgruppe, wobei die Gesamtzahl der Kohlenstoffatome in den Alkylketten 4 bis 40 beträgt, m kann Werte von 1 bis 20, vorzugsweise von 1 bis 10 annehmen. n kann Werte von 3 bis 100, vorzugsweise von 4 bis 50, insbesondere 4 bis 30 annehmen. Das Kation M kann Natrium, Kalium, Lithium, Ammonium, Calcium oder Magnesium sein. Als Alkohole, deren Oxethylate den Carboxymethylaten zugrunde liegen, lassen sich z.B. einsetzen: Hexylalkohol, Octylalkohol, Nonylalkohol, Decylalkohol, Undecylalkohol, Lauryl-, Tridecyl-, Myristyl-, Palmityl- und Stearylalkohol, aber auch ungesättigte Alkohole, wie z.B. Oleylalkohol. Die Alkylkette kann dabei normal- oder verzweigtkettig sein. Als Alkylphenole lassen sich z.B. heranziehen: Butylphenol, Pentylphenol, Hexylphenol, Octylphenol, Nonylphenol, Decylphenol, Undecylphenol, Dodecylphenol, Tridecylphenol sowie die entsprechenden Dialkylphenole, wie z.B. 2-Methyl-4-Tridecylphenol, 2-Dodecycl-4-Ethylphenol, Dinonylphenol, etc. Die Alkylkette kann normal oder verzweigt sein. Es lassen sich auch Trialkylphenole einsetzen wie Tri-n-butylphenol, Tri-t-butylphenol, Dimethylnonylphenol oder Tetralkylphenole wie Tetrabutylphenol. Die Oxethylierung kann in Gegenwart katalytischer Mengen Alkalihydroxid mit 1 bis 20, vorzugsweise 1 bis 10 mol Propylenoxid/mol Hydroxylverbindung und danach mit 3 bis 100, vorzugsweise 4 bis 50, insbesondere 4 bis 30 mol Ethylenoxid/mol Hydroxylverbindung durchgeführt werden. Die so entstehenden Oxethylate sind Homologengemische. Die sich anschließende Carboxymethylierung kann bei entsprechender Verfahrensweise vollständig sein, so daß die carboxymethylierten Oxethylate rein anionische Tenside sind. Alternativ bei nicht vollständiger Carboxymethylierung enthalten die Produkte noch mehr oder minder große Mengen nicht umgesetztes Oxethylat. Mit der Formel $R-(OC_3H_6)_m/OC_2H_4)_nOCH_2COOM$ ist daher häufig ein Gemisch mit unterschiedlichen Mengen an nicht umgesetztem Oxethylat gemeint. Demgemäß läßt sich ein Carboxymethylierungsgrad definieren. Es hat sich gezeigt, daß Mischungen mit einem Carboxymethylierungsgrad zwischen 10 und 100%, vorzugsweise zwischen 50 und 100%, und ganz besonders zwischen 70 und 100% sehr wirksam sind.

Geeignete hydrophobere Tenside sind Monoalkylbenzolsulfonate mit 6 bis 20, vorzugsweise 8 bis 16 C-Atomen in der, ggf. verzweigten, Alkylkette oder Dialkylbenzolsulfonate mit 1 bis 20 C-Atomen pro ggf. verzweigter Alkylkette, wobei die Gesamtzahl der C-Atome in den Alkylketten pro Molekül 8 bis 30, vorzugsweise 10 bis 24 beträgt. Es können auch Mischungen von Mono- und Dialkylsulfonaten eingesetzt werden. Solche Alkyl- bzw. Dialkylbenzolsulfonate lassen sich durch Alkylierung von Benzol, z.B. mit linearen oder verzweigten Olefinen in Gegenwart geeigneter Alkylierungskatalysatoren und anschließender Sulfonierung herstellen. Ebenfalls geeignet als hydrophobe Tensidkomponente sind Alkansulfonate mit 10 bis 30, vorzugsweise 12 bis 24 C-Atomen, wie sie sich z.B. durch Sulfoxydation von Paraffinen herstellen lassen. Geeignet sind ebenfalls die aus der Ölschicht gewonnenen Petroleumsulfonate.

In vielen Versuchen hat sich gezeigt, daß der Zusatz von Cotensiden von Vorteil ist, in ausreichenden Mengen zugesetzt, wird die teilweise stark trübe Dispersion der wirksamen Tensidmischung in eine wasserklare Lösung überführt. Gleichzeitig nimmt der tensidbedingte Entölungsgrad bei linearen Verdrängungsversuchen an Bohrkernen zu. Geeignete Cotenside sind einwertige Alkohole mit 3 bis 8 C-Atomen, wie z.B. Propanolisomere, Butanolisomeren, Pentanolisomere, etc., oder mehrwertige Alkohole mit 3 bis 8 C-Atomen, wie Propandiol, Butandiol, Pentandiol, etc., oder Alkylether mehrwertiger Alkohole, wie Ethylenglykolmonoethylether, Ethylenglykolmonoisopropylether, Ethylenglykolmonobutylether, Diethylenglykolmonobutylether, etc.

Die erfindungsgemäßen Tensid- bzw. Tensid-Cotensidgemische müssen an die Bedingung des betreffenden Lagerstättensystems angepaßt werden. Kritische Größen sind hierbei die Bestandteile des Lagerstättenwassers, und, sofern dieses nicht reinjiziert wird, auch die Zusammensetzung des Flutwassers, ferner der Charakter des Lagerstättenöls, die Temperatur bzw. der Temperaturbereich der Lagerstätte, ggf. die Zusammensetzung der Gasphase und der Lagerstättendruck. Vorversuche zur Anpassung des Tensidsystems an die Lagerstättenbedingungen sind literaturbekannte Phasenuntersuchungen etwa im Sinne eines Phasenvolumendiagramms (vgl. H. Kraft, G. Pusch, SPE/DOE-Paper 10714), wobei an einer Mischung aus Lagerstättenöl, Lagerstättenwasser bzw. Flutwasser und Tensid bzw. Tensid/Cotensid die Volumina der oberen, mittleren und unteren Phase in Abhängigkeit der Temperatur bestimmt werden. Wünschenswert ist eine solche Tensid- bzw. Tensid/Cotensidkombination, die zu einem weitgehend temperaturunabhängigen Phasenverhalten mit ausgeprägter Bildung einer mittelphasigen Mikroemulsion führt. Ein solcher Befund allein ist allerdings nicht hinreichend. So haben Untersuchungen am System Dekan/Seewasser in Gegenwart von Alkylbenzolsulfonat/Nonylphenoloxethylaten/ i-Butanol zwar das gewünschte weitgehend temperaturunabhängige Phasenverhalten, nicht jedoch die parallel hierzu in Flutversuchen untersuchte Entölung gezeigt. Weitere notwendige Vorversuche zur Anpassung des Tensidsystems an die Lagerstätte, die unmittelbar dessen Wirksamkeit aufzeigen, bestehen daher in linearen Verdrängungsversuchen an Modellformationen aus Sandstein oder Sand, den sogenannten Flutversuchen, wie in den Beispielen beschrieben. Im Unterschied zu den Phasenunter-chungen, bei denen ein während des Tensidflutens kaum realisierter Gleichgewichtszustand betrachtet wird, berücksichtigen die Verdrängungsversuche die realiter in der Lagerstätte sich abspielenden Ungleichgewichtsprozesse.

Flutversuche möglichst an Originalbohrkernmaterial und, soweit notwendig, unter Lagerstättenbedingungen, dienen einer labormäßigen Optimierung des Tensid- bzw. Tensid/Cotensidsystems hinsichtlich der Flüssigkeitsform des Wirkstoffs (Lösung, Dispersion oder Emulsion), seiner Konzentration und seines Volumens, ferner hinsichtlich der Art, Konzentration und des Volumens der als Mobilitätspuffer zu verwendenden Polymerlösung.

Aufgrund dieser Vorversuche wird die Tensidlösung oder Dispersion mit Injektionspumpen in die Lagerstätte eingebracht. Dieses geschieht in Form von Slugs, d.h. begrenzter Volumina von 0,01 bis 2 PV (= Porenvolumen der Lagerstätte), vorzugsweise 0,02 bis 1,2 PV. Die Größe des Tensidslugs richtet sich nach der Tensidkonzentration und nach der Wirtschaftlichkeit. Gewöhnlich liegt die Tensidkonzentration zwischen 0,1 und 20%, vorzugsweise zwischen 0,2 und 10%. In dieser Tensidkonzentration sind nur das carboxymethylierte Oxethylat und das zugesetzte hydrophobe Tensid enthalten. Die Massen beider verhalten sich zueinander wie 1:5 bis 5:1, vorzugsweise 1:3 bis 3:1. Wird ein Cotensid zugesetzt, so soll sich seine Masse zu der der Tensidmischung verhalten wie 1:5 bis 5:1.

Zweckmäßigerweise wird vor der Injektion der Tensidflüssigkeit mit Wasser geflutet, wobei als Flutwasser vorzugsweise das produzierte Formationswasser eingesetzt wird. In speziellen Fällen kann es zweckmäßig sein, mit einem Wasser anderer Zusammensetzung als der des Formationswassers zu fluten. Dies kann logistische Gründe haben, oder es empfiehlt sich, die Lagerstätte hinsichtlich einer bestimmten Salinität zu konditionieren. Die Größe des Flutwasserslugs beträgt 0,01 bis 4 PV, vorzugsweise 0,1 bis 2 PV.

Sowohl aus Gründen der Mobilitätskontrolle – wie erwähnt – als auch zum Schutz der Tensidflüssigkeiten vor eindringendem Flutwasser kann man nach der letzten Tensidflüssigkeit Polymerlösung in die Lagerstätten injizieren. Hierzu wird ein Polymer oder ein Polymergemisch in einer solchen Konzentration in dem Flutwasser gelöst, daß die Viskosität 1,2 bis 10 mal so hoch ist wie die des Öls unter Lagerstättenbedingungen. Als Polymere kommen Biopolymere, wie beispielsweise Xanthan Gum, oder Cellulosederivate und Polyacrylamide infrage, die in Gegenwart der vorgegebenen Salinität noch eine ausreichende Viskosität besitzen und keine Fällungen zeigen. Zweckmäßigerweise schließt sich an das Injizieren der Polymerlösung normales Wasserfluten als Trieb an. Dieses wird solange forgesetzt, wie sich wirtschaftlich Öl gewinnen läßt.

Die nachfolgenden Beispiele sollen das erfindungsgemäße Verfahren erläutern. Sie sind lineare Verdrängungsversuche entweder an Sandschüttungen oder an Sandsteinbohrkernen als labormäßige Modellformationen.

Zur Herstellung einer Sandschüttung wurde ein thermostatisierbares Stahlrohr von 70 cm Länge und 5 cm Durchmesser, versehen mit Temperaturmeßeinrichtung und Manometer, beidseitig verschließbar durch Gewindeverschlüsse mit Kapillareingang und Druckhalteventilausgang, mit kantengerundetem Quarzsand beschickt. Sodann wurde mittels einer Membranpumpe die Sandschüttung mit Salzwasser benetzt und durch einen Thermostaten auf die gewünschte Temperatur gebracht. Mit Hilfe von Drucktransmittern wurde die Permeabilität der Schüttung bestimmt. Sodann erfolgte Sättigung mit einem Modellöl (n-Dekan oder Rohöl), wobei sich gleichzeitig der Haftwassergehalt bestimmen ließ. Anschließend wurde mit einer Geschwindigkeit von ca. 1 m/d 1.5 PV (1 PV ca. 750 ml) Salzwasser injiziert, wobei sich ein Verwässerungsgrad von 98 bis 100% einstellte. Nach diesem sogenannten Wasserfluten wurde zunächst das Tensidgemisch und anschließend die Polymerlösung, beide als Slug, injiziert. Als Trieb wurde weiteres Salzwassser eingepreßt.

Zur Herstellung von Modellformationen aus konsolidiertem Gestein wurden zylindrische Bohrkerne von 50 cm Länge und 8 cm Durchmesser aus Bentheimer Sandstein in Epoxidharz eingebettet. Bei den 90°C-Versuchen wurden dünnere Bohrkerne (Durchmesser 4 cm) mit niedrig schmelzenden Metallgemischen eingebettet. Die Porenvolumina betrugen ca. 600 bzw. 150 ml, die Flutgeschwindigkeit ca. 0,5 m/d. Die Temperierung bei den in Harz eingebetteten Kernen erfolgte mittels eines offenen Temperaturbades. Ansonsten bestanden keine Unterschiede bei dem Betrieb dieser Modellformationen im Vergleich zu dem an Sandschüttungen. Bei allen Verdrängungsversuchen wurden nach der Injektion des Tensidsystems 0,6 PV einer 0,2%igen Lösung von Polymer-Flocon 4800 (Xanthan, Pfizer) in dem betreffenden Salzwasser in die Formation eingepreßt.

Beispiele 1 bis 4

Die erfindungsgemäßen Beispiele sind in der folgenden Tabelle dargestellt. Es wurden folgende Substanzen eingesetzt:
Öle: D n-Dekan 96%
Salzwasser: S synthet. Seewasser
(1,12% $Na^+$, 0,035% $K^+$, 0,047% $Cd^{++}$, 0,133% $Mg^{++}$, 2,02% $Cl^-$, 0,27% $SO_4^{2-}$)
Carboxymethyliertes Oxalkylat
$a_7$ = carboxymethyliertes Dinonylphenolblockpropoxyoxethylat-Natriumsalz mit 3 mol PO/mol und 12 mol EO/mol, CM 75%
Hydrophobe Tenside (Sulfonate)
$b_1$ = i-Oktyl-butylbenzolsulfonat Aktivsubstanz 52%, Neutralöl 0,1%
$b_7$ = Heptadecansulfonat Monosulfonat 84%, Disulfonat 11%, $Na_2SO_4$ 4%

Cotenside

$c_1$ = i-Butanol (99,5%)

Es ist aus den Beispielen 3 und 4 ablesbar, daß die Ölmobilisierung über einen breiten Temperaturbereich erfolgt.

| Nr. | Formation Permeab. (D) | Öl | Salz-wasser | Tempe-ratur (°C) | Tensidsystem carboxymeth. Oxalkylat | Sulfonat | Cotensid | $\Delta E_w^{**}$ $\Delta E_T$ (%OOIP) | $\Delta p^{***}$ (bar/m) |
|---|---|---|---|---|---|---|---|---|---|
| 1 | Kern, 1.7 | D | S | 20 | $a_7$, 2 % | $b_1$, 2 % | $c_2$, 4 % | 47 33 | 0.7 |
| 2 | Kern, 1.4 | D | S | 90 | $a_7$, 2 % | $b_1$, 2 % | $c_1$, 4 % | 48 12 | 0.5 |
| 3 | Kern, 1.9 | D | S | 20 | $a_7$, 2 % | $b_7$, 2 % | $c_1$, 4 % | 54 30 | 0.5 |
| 4 | Sand, 0.7 | D | S | 90 | $a_7$, 2 % | $b_7$, 2 % | $c_1$, 4 % | 82 12 | 1.0 |

\* Tensidslug 0.15 PV

\*\* $\Delta E_w$ bzw. $\Delta E_T$ bedeuten die Entölung (% OOIP) mittels Wasserfluten bzw. Tensidfluten

\*\*\*$\Delta p$ ist der maximale Druckgradient

## Patentansprüche

1. Verfahren zur Gewinnung von Öl aus unterirdischem Speichergestein, das mindestens durch eine Injektions- und eine Produktionsbohrung durchteuft ist, durch Einpressen einer Lösung oder Dispersion eines carboxymethylierten Oxalkylates der Formel R $(OC_3H_6)_m(OC_2H_4)_nOCH_2COOM$, in der R einen linearen oder verzweigten aliphatischen Rest mit 6 bis 20 Kohlenstoffatomen, einen monoalkylaromatischen Rest mit 3 bis 18 Kohlenstoffatomen in der Alkylgruppe oder einen di- bzw. oligoalkylaromatischen Rest mit 1 bis 18 Kohlenstoffatomen pro Alkylgruppe, wobei die Gesamtzahl der Kohlenstoffatome in den Alkylketten 5 bis 40 beträgt, m 1 bis 20, n 3 bis 100, M ein Alkali- oder Erdalkalimetallion oder Ammonium bedeuten und der Carboxymethylierungsgrad zwischen 10 und 100% liegt, in eine Injektionsbohrung, dadurch gekennzeichnet, daß das carboxymethylierte Oxalkylat in Mischung mit einem hydrophoberen Tensid eingesetzt wird.

2. Verfahren nach Anspruch 1, dadurch gekennzeichnet, daß das hydrophobere Tensid ein Monoalkylbenzolsulfonat mit 6 bis 20 Kohlenstoffatomen in der Alkylkette oder ein Dialkylbenzolsulfonat mit 1 bis 20 Kohlenstoffatomen pro Alkylkette, wobei die Gesamtzahl der Kohlenstoffatome in den Alkylketten pro Molekül 8 bis 30 beträgt, ein Petroleumsulfonat oder ein Alkansulfonat mit 10 bis 30 C-Atomen ist.

3. Verfahren nach einem der Ansprüche 1 und 2, dadurch gekennzeichnet, daß die zu injizierende Tensidlösung oder -dispersion eine Konzentration von 0,1 bis 20 Gew.-% Tensid besitzt.

4. Verfahren nach einem der Ansprüche 1 bis 3, dadurch gekennzeichnet, daß die Sluggröße der tensidhaltigen Flüssigkeit 0,01 bis 2 Porenvolumen (PV) der Lagerstätte beträgt.

5. Verfahren nach einem der Ansprüche 1 bis 4, dadurch gekennzeichnet, daß sich die Massen des carboxymethylierten Oxethylats zu denen des hydrophoberen Tensids verhalten wie 4:1 bis 1:4.

6. Verfahren nach einem der Ansprüche 1 bis 5, dadurch gekennzeichnet, daß nach der Injektion des aus Tensidlösung Slugs Formations- oder Flutwasser in die Lagerstätte eingepreßt wird.

7. Verfahren nach Anspruch 6, dadurch gekennzeichnet, daß das Formations- oder Flutwasser ein wasserlösliches, viskositätserhöhendes Polymer enthält.

8. Verfahren nach einem der Ansprüche 1 bis 7, dadurch gekennzeichnet, daß der Tensidmischung ein Cotensid im Verhältnis 1:5 bis 5:1 zugesetzt wird.

9. Verfahren nach Anspruch 8, dadurch gekennzeichnet, daß ein- oder mehrwertige Alkohole oder Alkylether von mehrwertigen Alkoholen als Cotensid eingesetzt werden.

## Claims

1. A process for the recovery of oil from a subterranean deposit, which is bored at least through one injection well and one production well, by injection into an injection well of a solution or dispersion of a carboxymethylated oxyalkylate of the formula

R-$(OC_3H_6)_m(OC_2H4)_nOCH_2COOM$

in which R denotes a linear or branched aliphatic radical of 6 to 20 carbon atoms, a monoalkylaromatic radical of 3 to 18 carbon atoms in the alkyl group or a di- or oligo alkylaromatic radical of 1 to 18 carbon atoms per alkyl group, the total number of carbon atoms in the alkyl chains being 5 to 40, m denotes 1 to 20, n denotes 3 to 100, M denotes an alkali metal or alkaline earth metal ion or amonium and the degree of carboxymethylation is from 10 to 100%, characterised in that the carboxymethylated oxyalkylate is used in admixture with a hydrophobic surfactant.

**EP 0 207 312 B1**

2. A process according to claim 1, characterised in that the hydrophobic surfactant is a monoalkylbenzene sulphonate of 6 to 20 carbon atoms in the alkyl chain or a dialkylbenzene sulphonate of 1 to 20 carbon atoms per alkyl chain, the total number of carbon atoms in the alkyl chains being 8 to 30 per molecule, a petroleum sulphonate, or an alkanesulphonate of 10 to 30 carbon atoms.

3. A process according to any one of claims 1 and 2, characterised in that the surfactant solution or dispersion to be injected has a concentration of 0.1 to 20% by weight of surfactant.

4. A process according to any one of claims 1 to 3, characterised in that the slug size of the liquid containing surfactant is 0.01 to 2 pore volumes (PV) of the reservoir.

5. A process according to any one of claims 1 to 4, characterised in that the ratio of the mass of the carboxymethylated oxyalkylate to that of the hydrophobic surfactant is from 4:1 to 1:4.

6. A process according to any one of claims 1 to 5, characterised in that after the injection of the slug of surfactant solution formation water or flooding water is injected into the reservoir.

7. A process according to claim 6, characterised in that the formation water or flooding water contains a water-soluble polymer which increases its viscosity.

8. A process according to any one of claims 1 to 7, characterised in that a co-surfactant is used with the surfactant in the ratio of 1:5 to 5:1.

9. A process according to claim 8, characterised in that monohydric or polyhydric alcohols or alkylethers of polyhydric alcohols are used as co-surfactant.

## Revendications

1. Procédé pour obtenir du pétrole à partir d'un gisement souterrain qui est traversé au moins par un forage d'injection et un forage de production, par envoi sous pression, dans un forage d'injection, d'une solution ou dispersion d'un oxalkylat carboxyméthylé de formule

$R\text{-}(OC_3H_6)_m(OC_2H_4)_nOCH_2COOM$

dans laquelle R représente un radical aliphatique linéaire ou ramifié comportant de 6 à 20 atomes de carbone, un radical mono-alkyl-aromatique comportant de 3 à 18 atomes de carbone dans le groupe alkyle ou un radical di- ou oligoalkyl-aromatique comportant de 1 à 18 atomes de carbone par groupe alkyle, le nombre total des atomes de carbone dans les chaînes alkyle étant de 5 à 40, $\underline{m}$ ayant une valeur de 1 à 20, $\underline{n}$ ayant une valeur de 3 à 100, M représentant un ion de métal alcalin ou alcalino-terreux ou de l'ammonium et le degré de carboxyméthylation se situant entre 10 et 100%, ledit procédé étant caractérisé par le fait que l'oxalkylat carboxyméthylé est utilisé en mélange avec un tensio-actif plus hydrophobe.

2. Procédé selon la revendication 1, caractérisé par le fait que le tensio-actif plus hydrophobe est un mono-alkyl-benzène-sulfonate comportant de 6 à 20 atomes de carbone dans la chaîne alkyle ou un di-alkyl-benzène-sulfonate comportant de 1 à 20 atomes de carbone par chaîne alkyle, le nombre total des atomes de carbone dans les chaînes alkyle étant de 8 à 30 par molécule, un sulfonate de pétrole ou un alkane-sulfonate comportant de 10 à 30 atomes de carbone.

3. Procédé selon l'une des revendications 1 et 2, caractérisé par le fait que la solution ou dispersion de tensio-actif à injecter possède une concentration en tensio-actif de 0,1 à 20% en poids.

4. Procédé selon l'une des revendications 1 à 3, caractérisé par le fait que l'importance du flux du liquide tensio-actif atteint de 0,01 à 2 volumes de pores (VP) du gisement.

5. Procédé selon l'une des revendications 1 à 4, caractérisé par le fait que les masses de l'oxéthylat carboxyméthylé et celles du tensio-actif plus hydrophobe sont dans un rapport de 4:1 à 1:4.

6. Procédé selon l'une des revendications 1 à 5, caractérisé par le fait qu'après injection de la masse de la solution de tensio-actif, on injecte sous pression dans le gisement de l'eau de formation ou de l'eau d'inondation.

7. Procédé selon la revendication 6, caractérisé par le fait que l'eau de formation ou l'eau d'inondation renferme un polymère soluble dans l'eau, augmentant la viscosité.

8. Procédé selon l'une des revendications 1 à 7, caractérisé par le fait qu'au mélange de tensio-actif on ajoute un co-tensio-actif dans une rapport de 1:5 à 5:1.

9. Procédé selon la revendication 8, caractérisé par le fait que l'on utilise, comme co-tensio-actif, des mono- ou poly-alcools ou des éthers alkyliques de poly-alcools.